(19)

**Europäisches Patentamt**
**European Patent Office**
**Office européen des brevets**

(11) **EP 4 507 241 A1**

(12) **EUROPEAN PATENT APPLICATION**

(43) Date of publication:
**12.02.2025 Bulletin 2025/07**

(21) Application number: **24193674.9**

(22) Date of filing: **08.08.2024**

(51) International Patent Classification (IPC):
**H04L 5/00** $^{(2006.01)}$

(52) Cooperative Patent Classification (CPC):
**H04L 5/0055; H04L 1/1861; H04L 5/0094;**
**H04L 2001/0092**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **09.08.2023 US 202363531735 P**
**31.07.2024 US 202418791327**

(71) Applicant: **Apple Inc.**
**Cupertino, CA 95014 (US)**

(72) Inventors:
• **YE, Chunxuan**
  **San Diego, California (US)**
• **BHAMRI, Ankit**
  **Bad Nauheim, Germany (DE)**
• **ZHANG, Dawei**
  **Saratoga, California (US)**
• **SUN, Haitong**
  **Cupertino, California (US)**
• **HE, Hong**
  **San Jose, California (US)**
• **NIU, Huaning**
  **San Jose, California (US)**
• **ZENG, Wei**
  **Saratoga, California (US)**

(74) Representative: **Simmons & Simmons**
**City Point**
**One Ropemaker Street**
**London EC2Y 9SS (GB)**

(54) **RESOURCE MAPPING FROM PSSCH TO PSFCH WITH DEDICATED PRBS IN UNLICENSED SPECTRUM**

(57)     Systems and methods are configured for receiving configuration data specifying a mapping for physical sidelink shared channel (PSSCH) or physical sidelink control channel (PSCCH) resource blocks to respective candidate physical sidelink feedback channel (PSFCH) resource blocks, the mapping specifying, for a PSSCH or PSCCH transmission, a set of candidate PSFCH resource blocks, the set of candidate PSFCH resource blocks including a common interlace resource block and a set of dedicated resource blocks for PSFCH transmissions; transmitting the PSSCH or PSCCH transmission; and receiving, based on the mapping, a PSFCH transmission from a user equipment (UE), the PSFCH transmission being transmitted using a PSFCH resource block of the set of candidate PSFCH resource blocks.

$200$

| Configure a per-resource block (RB) set operation in which the total number of PSFCH PRBs over an RB set in each PSFCH periodicity is $M_{PRB,set}^{PSFCH}$ | 202 |

| Configure a total number of PSFCH PRBs for each PSSCH/ PSCCH transmission as being $M_{subch,slot,reTx}^{PSFCH}$ which is larger than or equal to $K_3$ | 204 |

| Index PSFCH dedicated PRBs over $M_{PRB,set}^{PSFCH}$ PRBs | 206 |

| Allocate, by the UE, the set of PSFCH PRBs for the corresponding PSSCH transmission | 208 |

| Determine, by the UE, a number of PSFCH resources available for multiplexing HARQ-ACK in a PSFCH transmission | 210 |

| Index PSFCH resources | 212 |

| Determine, by the UE, the indices of PSFCH resources for a PSFCH transmission with HARQ-ACK information in response to a PSSCH reception | 214 |

**FIG. 2A**

EP 4 507 241 A1

**Description**

**CLAIM OF PRIORITY**

This application claims priority under 35 U.S.C. §119(e) to U.S. Patent Application Serial No. 63/531,735, filed on August 9, 2023, the entire contents of which are hereby incorporated by reference.

**BACKGROUND**

Wireless communication networks provide integrated communication platforms and telecommunication services to wireless user devices. Example telecommunication services include telephony, data (e.g., voice, audio, and/or video data), messaging, and/or other services. The wireless communication networks have wireless access nodes that exchange wireless signals with the wireless user devices using wireless network protocols, such as protocols described in various telecommunication standards promulgated by the Third Generation Partnership Project (3GPP). Example wireless communication networks include time division multiple access (TDMA) networks, frequency-division multiple access (FDMA) networks, orthogonal frequency-division multiple access (OFDMA) networks, Long Term Evolution (LTE), and Fifth Generation New Radio (5GNR). The wireless communication networks facilitate mobile broadband service using technologies such as OFDM, multiple input multiple output (MIMO), advanced channel coding, massive MIMO, beamforming, and/or other features.

**SUMMARY**

This disclosure describes systems and methods that map an association between physical sidelink shared channel (PSSCH) or physical sidelink control channel (PSCCH) and the physical sidelink feedback channel (PSFCH) in the unlicensed spectrum. Each PSFCH transmission occupies 1 common interlace and K3 dedicated PRB(s). Different mappings are described between each PSSCH/PSCCH resource and PSFCH resource. Specifically, the transmitting UE determines, based on the mapping, which PSFCH resource to monitor to receive the ACK/NACK feedback from the receiving UE. Conversely, the receiving UE, when receiving the PSSCH/PSCCH transmission, determines based on the mapping which PSFCH resource to use for transmitting the ACK/NACK response, because there are multiple associated candidate PSFCH occasion(s) for a single PSSCH/PSCCH transmission. In some implementations, each receiver UE determines its own PSFCH resources. In some implementations, the PSFCH resource is in the same RB set as PSSCH/PSCCH resource. In some implementations, the PSFCH resource may not be in the same RB set as PSSCH/PSCCH resource. This can occur of the resource pool includes more than one RB set. The PSCCH/PSSCH can be transmitted in the first RB set of the resource pool, and the PSFCH can be transmitted in the second RB set of the resource pool.

In a general aspect, a process includes receiving configuration data specifying a mapping for physical sidelink shared channel (PSSCH) or physical sidelink control channel (PSCCH) resource blocks to respective candidate physical sidelink feedback channel (PSFCH) resource blocks, the mapping specifying, for a PSSCH or PSCCH transmission, a set of candidate PSFCH resource blocks, the set of candidate PSFCH resource blocks including a common interlace resource block and a set of dedicated resource blocks for PSFCH transmissions; transmitting the PSSCH or PSCCH transmission; and receiving, based on the mapping, a PSFCH transmission from a user equipment (UE), the PSFCH transmission being transmitted using a PSFCH resource block of the set of candidate PSFCH resource blocks.

In some implementations, the set of dedicated resource blocks are reserved for an ACK or NACK response from the UE.

In some implementations, the set of dedicated resource blocks are on a same interlace, and wherein the set of dedicated resource blocks incudes 1, 2 or 5 resource blocks.

In some implementations, the set of candidate PSFCH resource blocks are in a same resource block set.

In some implementations, the mapping specifies, for a resource block set, a total number of interlaces for the dedicated resource blocks and a total number of resource blocks in each interlace that are candidate dedicated resource blocks.

In some implementations, the mapping specifies, for a resource block set, a total number of candidate dedicated resource blocks for the PSFCH transmissions.

In some implementations, the process includes determining a number of PSFCH dedicated resource blocks available for multiplexing HARQ-ACK in a PSFCH transmission for a PSSCH/PSCCH transmission as

$$M^{PSFCH}_{subch,slot,reTx} = \frac{M^{PSFCH}_{PRB,set}}{N_{subch} \cdot N^{PSFCH}_{PSSCH} \cdot N_{reTx}},$$

, where $N_{subch}$ is the number of sub-channels in the resource block set,

$N_{PSSCH}^{PSFCH}$ is a periodicity of the PSFCH transmissions having values of {1,2,4}, and $N_{reTx}$ is a number of candidate PSFCH occasions having values of {1,2,3,4}.

In some implementations, the process includes indexing, based on the mapping of the configuration data, the set of candidate PSFCH dedicated resource blocks. In some implementations, the indexing comprises indexing resource blocks in a first interlace before indexing resource blocks in a second interlace. In some implementations, indexing comprises indexing resource blocks in a frequency domain.

In some implementations, the process includes allocating a set of PSFCH resource blocks for a PSSCH or PSCCH transmission, wherein allocating the set of PSFCH resource blocks comprises: incrementing an index over PSSCH slots associated with a PSFCH slot; after incrementing the index over the PSSCH slots, incrementing the index over subchannels associated with the PSFCH slot; and after incrementing the index over the subchannels, incrementing the index over retransmission instances associated with the PSFCH slot.

In some implementations, the process includes allocating a set of PSFCH resource blocks for a PSSCH or PSCCH transmission. Allocating the set of PSFCH resource blocks can include incrementing an index over PSSCH slots associated with a PSFCH slot; after incrementing the index over the PSSCH slots, incrementing the index over retransmission instances associated with the PSFCH slot; and after incrementing the index over the PSSCH slots, incrementing the index over subchannels associated with the PSFCH slot.

In some implementations, the process includes allocating a set of PSFCH resource blocks for a PSSCH or PSCCH transmission. In some implementations, allocating the set of PSFCH resource blocks includes incrementing an index over subchannels associated with a PSFCH slot; after incrementing the index over the subchannels, incrementing the index over PSSCH slots associated with the PSFCH slot; and after incrementing the index over the PSSCH slots, incrementing the index over retransmission instances associated with the PSFCH slot.

In some implementations, the process includes allocating a set of PSFCH resource blocks for a PSSCH or PSCCH transmission. In some implementations, allocating the set of PSFCH resource blocks includes incrementing an index over PSSCH slots associated with a PSFCH slot; and after incrementing the index over the PSSCH slots, incrementing the index over subchannels associated with the PSFCH slot.

In some implementations, the process includes allocating a set of PSFCH resource blocks for a PSSCH or PSCCH transmission. In some implementations, allocating the set of PSFCH resource blocks includes incrementing an index over subchannels associated with a PSFCH slot; and after incrementing the index over the subchannels, incrementing the index over PSSCH slots associated with the PSFCH slot.

In some implementations, the process includes determining a number of PSFCH resources available for multiplexing HARQ-ACK in the PSFCH transmission based on a resource block index and based on a cyclic shift pair index. In some implementations, the process includes indexing the PSFCH resource blocks first in ascending order based on the resource block index and second in ascending order based on the cyclic shift pair index. In some implementations, the process includes indexing the PSFCH resource blocks first in ascending order based on the resource block index and second in ascending order based on the cyclic shift pair index.

In some implementations, the process includes determining indices of a PSFCH resources for the PSFCH transmission with HARQ-ACK information in response to receiving the PSSCH transmission.

In some implementations, the set of candidate PSFCH resource blocks are in at least two resource block sets.

In some implementations, the process includes allocating a set of PSFCH resource blocks for a PSSCH or PSCCH transmission. In some implementations, allocating the set of PSFCH resource blocks includes incrementing an index over PSSCH slots associated with a PSFCH slot; after incrementing the index over the PSSCH slots, incrementing the index over subchannels associated with the PSFCH slot; and after incrementing the index over the subchannels, incrementing the index over resource block sets associated with the PSFCH slot.

In some implementations, the process includes allocating a set of PSFCH resource blocks for a PSSCH or PSCCH transmission. In some implementations, allocating the set of PSFCH resource blocks includes incrementing an index over subchannels associated with a PSFCH slot; after incrementing the index over the subchannels, incrementing the index over resource block sets associated with the PSFCH slot; and after incrementing the index over the resource block sets, incrementing the index over PSSCH slots associated with the PSFCH slot.

In a general aspect, a system includes one or more computers and one or more storage devices on which are stored instructions that are operable, when executed by the one or more computers, to cause the one or more computers to perform operations. The operations include receiving configuration data specifying a mapping for physical sidelink shared channel (PSSCH) or physical sidelink control channel (PSCCH) resource blocks to respective candidate physical sidelink feedback channel (PSFCH) resource blocks, the mapping specifying, for a PSSCH or PSCCH transmission, a set of candidate PSFCH resource blocks, the set of candidate PSFCH resource blocks including a common interlace resource block and a set of dedicated resource blocks for PSFCH transmissions; transmitting the PSSCH or PSCCH transmission; and receiving, based on the mapping, a PSFCH transmission from a user equipment (UE), the PSFCH transmission being transmitted using a PSFCH resource block of the set of candidate PSFCH resource blocks.

In a general aspect, one or more non-transitory computer storage media are encoded with instructions that, when executed by one or more computers, cause the one or more computers to perform operations. The operations include receiving configuration data specifying a mapping for physical sidelink shared channel (PSSCH) or physical sidelink control channel (PSCCH) resource blocks to respective candidate physical sidelink feedback channel (PSFCH) resource blocks, the mapping specifying, for a PSSCH or PSCCH transmission, a set of candidate PSFCH resource blocks, the set of candidate PSFCH resource blocks including a common interlace resource block and a set of dedicated resource blocks for PSFCH transmissions; transmitting the PSSCH or PSCCH transmission; and receiving, based on the mapping, a PSFCH transmission from a user equipment (UE), the PSFCH transmission being transmitted using a PSFCH resource block of the set of candidate PSFCH resource blocks.

In a general aspect, a non-transitory computer storage medium is encoded with instructions that, when executed by one or more computers, cause the one or more computers to perform the processes described herein.

In a general aspect, a system includes one or more computers and one or more storage devices on which are stored instructions that are operable, when executed by the one or more computers, to cause the one or more computers to perform the processes described herein.

The details of one or more embodiments of these systems and methods are set forth in the accompanying drawings and the description below. Other features, objects, and advantages of these systems and methods will be apparent from the description and drawings, and from the claims.

**BRIEF DESCRIPTION OF THE FIGURES**

FIG. 1 illustrates a wireless network, according to some implementations.

FIG. 2A illustrates an example process 200 for resource mapping from PSSCH/PSCCH to PSFCH with dedicated PRBs per RB set.

FIG. 2B illustrates an example process 200 for resource mapping from PSSCH/PSCCH to PSFCH with dedicated PRBs per resource pool.

FIG. 3 illustrates an example of a set of PSFCH PRBs for a corresponding PSSCH/PSCCH transmission.

FIG. 4 illustrates a set of PSFCH PRBs for a corresponding PSSCH transmission.

FIG. 5 illustrates an example of indexing PFSCH resources.

FIG. 6 shows an example of indexing PSFCH resources using a frequency domain first and a cyclic shift domain second.

FIG. 7 illustrates a flowchart of an example method, according to some implementations.

FIG. 8 illustrates an example user equipment (UE), according to some implementations.

FIG. 9 illustrates an example access node, according to some implementations.

**DETAILED DESCRIPTION**

In sidelink (SL) communications, a first UE is configured to communicate directly with a second UE without a base station. For SL transmissions, a UE is configured to perform a resource mapping between the physical sidelink shared channel (PSSCH) and the physical sidelink feedback channel (PSFCH) in the unlicensed spectrum. For the physical channel design framework, this disclosure discusses physical channel HARQ feedback. Specifically, this disclosure describes the physical channel design framework, including changes to NR sidelink physical channel structures and procedures to operate on unlicensed spectrum. In an example, the legacy NR sidelink and NR-U channel structure is reused as a baseline. In some implementations, this disclosure focuses on the frequency range 1 (FR1) unlicensed bands (n46 and n96/n102).

This disclosure describes new radio (NR) sidelink PSSCH-PSFCH mapping for scenarios in which the PSFCH occupies one common interlace. While the PSFCH transmission carries the ACK/NACK information, the one common interlace does not carry the ACK/NACK information but rather satisfies the occupied channel bandwidth (OCB) requirement for the unlicensed spectrum. A set of K3 dedicated PRBs are used with the one common interlace, and these dedicated PRBs transmit the ACK/NACK information.

The PSFCH transmission is mapped from the PSSCH/PSCCH. In an example, each PSFCH transmission occupies one common interlace and K3 dedicated PRBs. For interlacing in the unlicensed spectrum, there is one transmission in which there is one resource block (RB) set (e.g., 20 megahertz MHz). The RB set can include, for example, five interlaces in the 20 MHz. Each interlace includes, for example, 10 physical resource blocks (PRBs). These PRBs can be separated in the frequency domain, as subsequently described. For each interlace of PSSCH/PSCCH, a PSFCH transmission occupies one common interlace and K3 dedicated PRB(s). The PSFCH transmission has 15 kHz and 30 kHz SCS. The K3 dedicated PRBs are on the same interlace. K3 can be a preconfigured number, as subsequently described. K3 is (pre-)configured to one of a set of values (e.g., 1, 2, 5, etc.). Multiple cyclic shift (CS) pairs are used on the K3 dedicated PRB(s), as can occur in legacy NR SL PSFCH transmission. When a PRB of common interlace and a dedicated PRB are located within the same 1 MHz bandwidth, the UE transmits only on the dedicated PRB. In an example, each PSFCH transmission occupies 1 dedicated interlace. In another example, each PSFCH transmission occupies K4 dedicated PRB(s) and K2 common PRBs. The K2 common PRBs are located at the two edges of an RB set. In this example, K2 is a value of two, and K4 is a configured or preconfigured value. The mapping can be configured to satisfy power spectral density (PSD) limitations. For example, restrictions can be set on the locations of the K4 dedicated PRB(s) and/or the K2 common PRBs. For example, a restriction can be set on whether the K2 common PRBs and the K4 dedicated PRBs are in the same interlace at all, or if so, where on the interlace they are located.

For one PSCCH/PSSCH transmission, there are N associated candidate PSFCH occasion(s) selected by pre-configuration or configuration. In other works, there are multiple PSFCH occasions for each PSCCH/PSSCH transmission. This is because the PSFCH, for the unlicensed spectrum, is competing with other transmissions (e.g., WiFi) and may not always be successfully transmitted. Specifically, listen-before-talk (LBT) may fail if the channel is occupied by another transmission (e.g., WiFi). If this occurs, the device can wait for the next PSFCH occasion. The mapping from the PSCCH/PSSCH to the PSFCH accounts for this one-to-many mapping requirement.

Regarding locations of candidate PSFCH occasion(s), the associated PSFCH occasion(s) are within the RB set(s) occupied by PSSCH/PSCCH transmissions. A PSSCH/PSCCH transmission and its related PSFCH occasion(s) are in the same or different RB set(s) of the same resource pool. For one PSCCH/PSSCH transmission, at least support that its associated candidate PSFCH occasion(s) are in different slots of the same RB set(s). The system can support its associated candidate PSFCH occasion(s) in different RB sets of the same slot.

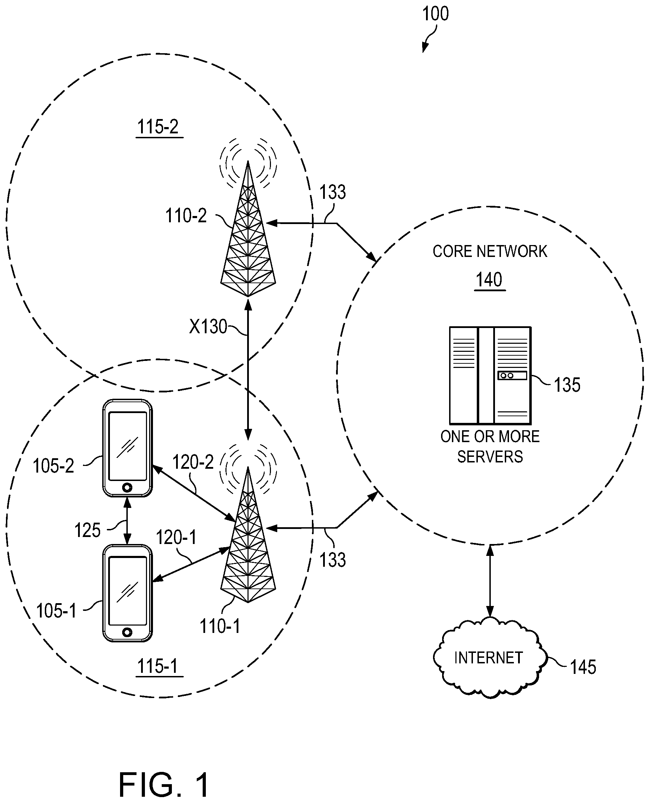

FIG. 1 illustrates an example communication system 100 that includes sidelink communications, according to some implementations. It is noted that the system of FIG. 1 is merely one example of a possible system, and that features of this disclosure may be implemented in other wireless communication systems.

The following description is provided for an example communication system that operates in conjunction with fifth generation (5G) networks as provided by 3GPP technical specifications. However, the example implementations are not limited in this regard and the described examples may apply to other networks that may benefit from the principles described herein, such as 3GPP Long Term Evolution (LTE) networks, Wi-Fi or Worldwide Interoperability for Microwave Access (WiMaX) networks, and the like. Furthermore, other types of communication standards are possible, including future 3GPP systems (e.g., Sixth Generation (6G)), IEEE 802.16 protocols, or the like. While aspects may be described herein using terminology commonly associated with 5G NR, aspects of the present disclosure can be applied to other systems, such as 3G, 4G, and/or systems subsequent to 5G (e.g., 6G).

Frequency bands for 5G NR may be separated into two different frequency ranges. Frequency Range 1 (FR1) may include frequency bands operating in sub-6 GHz frequencies, some of which are bands that may be used by previous standards and may potentially be extended to cover new spectrum offerings from 410 MHz to 7125 MHz. Frequency Range 2 (FR2) may include frequency bands from 24.25 GHz to 52.6 GHz. Bands in the millimeter wave (mmWave) range of FR2 may have smaller coverage but potentially higher available bandwidth than bands in the FR1.

As shown, the communication system 100 includes several user devices. More specifically, the communication system 100 includes two UEs 105 (UE 105-1 and UE 105-2 are collectively referred to as "UE 105" or "UEs 105"), two base stations 110 (base station 110-1 and base station 110-2 are collectively referred to as "base station 110" or "base stations 110"), two cells 115 (cell 115-1 and cell 115-2 are collectively referred to as "cell 115" or "cells 115"), and one or more servers 135 in a core network (CN) 140 that is connected to the Internet 145.

In some implementations, the UEs 105 can directly communicate with base stations 110 via links 120 (link 120-1 and link 120-2 are collectively referred to as "link 120" or "links 120"), which utilize a direct interface with the base stations referred to as a "Uu interface." Each of the links 120 can represent one or more channels. The links 120 are illustrated as an air interface to enable communicative coupling, and can be consistent with cellular communication protocols, such as a GSM protocol, a CDMA network protocol, a UMTS protocol, a 3GPP LTE protocol, an Advanced long term evolution (LTE-A) protocol, a LTE-based access to unlicensed spectrum (LTE-U), a 5G protocol, a NR protocol, an NR-based access to unlicensed spectrum (NR-U) protocol, and/or any of the other communications protocols discussed herein.

As shown, certain user devices may be able to conduct communications with one another directly, e.g., without an intermediary infrastructure device such as base station 110-1. In this example, UE 105-1 may conduct communications directly with UE 105-2. Similarly, the UE 105-2 may conduct communications directly with UE 105-1. Such peer-to-peer communications may utilize a "sidelink" interface such as a PC5 interface. In certain implementations, the PC5 interface supports direct cellular communication between user devices (e.g., between UEs 105), while the Uu interface supports cellular communications with infrastructure devices such as base stations. For example, the UEs 105 may use the PC5 interface for a radio resource control (RRC) signaling exchange between the UEs (also called PC5-RRC signaling). The PC5/Uu interfaces are used only as an example, and PC5 as used herein may represent various other possible wireless communications technologies that allow for direct sidelink communications between user devices, while Uu in turn may represent cellular communications conducted between user devices and infrastructure devices, such as base stations.

In some implementations, the UEs 105 may be configured with parameters for communicating via the Uu interface and/or the sidelink interface. In some examples, the UEs 105 may be "pre-configured" with some parameters. In these examples, the parameters may be hardwired into the UEs 105 or coded into spec. Additionally and/or alternatively, the UEs 105 may receive the parameters from the one or more of the base stations 110.

To transmit/receive data to/from one or more base stations 110 or UEs 105, the UEs 105 may include a transmitter/receiver (or alternatively, a transceiver), memory, one or more processors, and/or other like components that enable the UEs 105 to operate in accordance with one or more wireless communications protocols and/or one or more cellular communications protocols. The UEs 105 may have multiple antenna elements that enable the UEs 105 to maintain multiple links 120 and/or sidelinks 125 to transmit/receive data to/from multiple base stations 110 and/or multiple UEs 105. For example, as shown in FIG. 1, UE 105-1 may connect with base station 110-1 via link 120 and simultaneously connect with UE 105-2 via sidelink 125.

In some implementations, one or more sidelink radio bearers may be established on the sidelink 125. The sidelink radio bearers can include signaling radio bearers (SL-SRB) and/or data radio bearers (SL-DRB).

The PC5 interface may alternatively be referred to as a sidelink interface and may include one or more logical channels, including but not limited to a Physical Sidelink Control Channel (PSCCH), a Physical Sidelink Shared Channel (PSSCH), a Physical Sidelink Discovery Channel (PSDCH), a Physical Sidelink Broadcast Channel (PSBCH), Physical Sidelink Feedback Channel (PSFCH), and/or any other like communications channels. The PSFCH carries feedback related to the successful or failed reception of a sidelink transmission. The PSSCH can be scheduled by sidelink control information (SCI) carried in the sidelink PSCCH. In some examples, the sidelink interface can operate on an unlicensed spectrum (e.g., in the unlicensed 5 Gigahertz (GHz) and 6 GHz bands) or a (licensed) shared spectrum.

In one example, the sidelink interface implements vehicle-to-everything (V2X) communications. The V2X communications may, for example, adhere to 3GPP Cellular V2X (C-V2X) specifications, or to one or more other or subsequent standards whereby vehicles and other devices and network entities may communicate. V2X communications may utilize both long-range (e.g., cellular) communications as well as short- to medium-range (e.g., non-cellular) communications. Cellular-capable V2X communications may be called Cellular V2X (C-V2X) communications. C-V2X systems may use various cellular radio access technologies (RATs), such as 4G LTE or 5G NR RATs (or RATs subsequent to 5G, e.g., 6G RATs). Certain LTE standards usable in V2X systems may be called LTE-Vehicle (LTE-V) standards. As used herein in the context of V2X systems, and as defined above, the term "user devices" may refer generally to devices that are associated with mobile actors or traffic participants in the V2X system, e.g., mobile (able-to-move) communication devices such as vehicles, pedestrian user equipment (PUE) devices, and roadside units (RSUs).

In some implementations, UEs 105 may be physical hardware devices capable of running one or more applications, capable of accessing network services via one or more radio links 120 with a corresponding base station 110 (also referred to as a "serving" base station), and capable of communicating with one another via sidelink 125. Link 120 may allow the UEs 105 to transmit and receive data from the base station 110 that provides the link 120. The sidelink 125 may allow the UEs 105 to transmit and receive data from one another. The sidelink 125 between the UEs 105 may include one or more channels for transmitting information from UE 105-1 to UE 105-2 and vice versa and/or between UEs 105 and UE-type RSUs and vice versa.

In some implementations, the base stations 110 can communicate with one another over a backhaul connection 130 and may communicate with the one or more servers 135 within the CN 140 over another backhaul connection 133. The backhaul connections can be wired and/or wireless connections.

In some implementations, the UEs 105 are configured to use a resource pool for sidelink communications. A sidelink resource pool defines the time-frequency resources used for sidelink communications, and may be divided into multiple time slots, frequency channels, and frequency sub-channels. In some examples, the UEs 105 are synchronized and perform sidelink transmissions aligned with slot boundaries. A UE may be expected to select several slots and sub-channels for transmission of the transport block. In some examples, a UE may use different sub-channels for transmission of the transport block across multiple slots within its own resource selection window.

In some implementations, an exceptional resource pool may be configured for the UEs 105, perhaps by the base stations 110. The exceptional resource pool includes resources that the UEs 105 can use in exceptional cases, such as Radio Link Failure (RLF). The exceptional resource pool may include resources selected based on a random allocation of resources.

In some implementations, a UE that is initiating a communication with another UE is referred to as a transmitter UE (TX UE), and the UE receiving the communication is referred to as a receiver UE (RX UE). For example, UE 105-1 may be a TX UE and UE 105-2 may be an RX UE. Although FIG. 1 illustrates a single TX UE communicating with a single RX UE, a TX UE may communicate with more than one RX UE via sidelink.

In some implementations, a TX UE that is initiating sidelink communication may determine the available resources (e.g., sidelink resources) and may select a subset of these resources to communicate with an RX UE based on a resource allocation scheme. Example resource allocation schemes include Mode 1 and Mode 2 resource allocation schemes. In Mode 1 resource allocation scheme (referred to as "Mode 1"), the resources are allocated by a network node for in-coverage UEs. In Mode 2 resource allocation scheme (referred to as "Mode 2"), the TX UE selects the sidelink resources (e.g., sidelink transmission resources).

In some implementations, the communication system 100 supports different cast types, including unicast, broadcast, and groupcast (or multicast) communications. Unicast refers to direction communications between two UEs. Broadcast refers to a communication that is broadcast by a single UE to a plurality of other UEs. Groupcast refers to communications that are sent from a single UE to a set of UEs that satisfy a certain condition (e.g., being a member of a particular group).

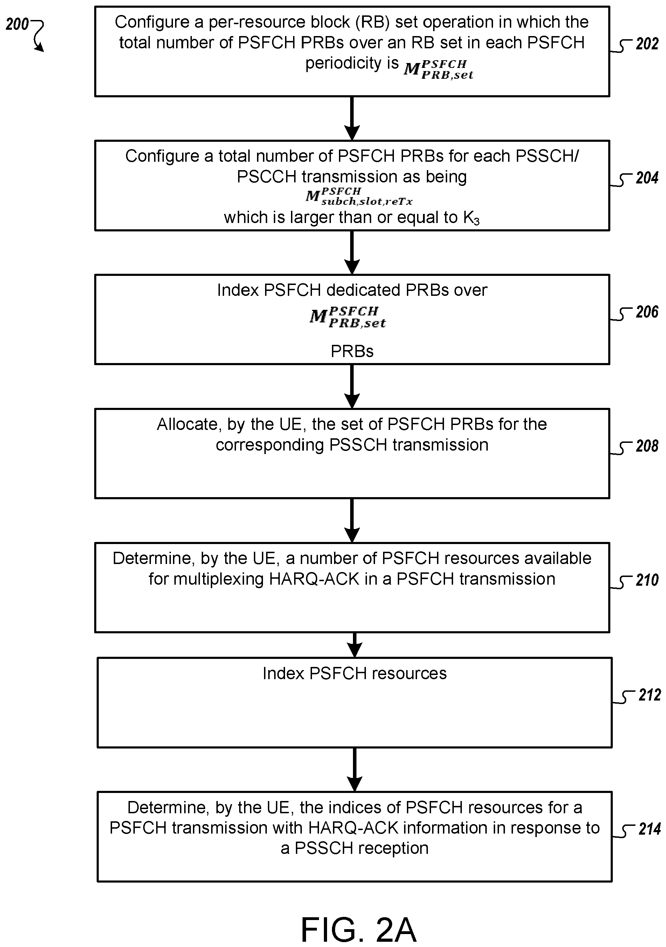

FIG. 2A illustrates an example process 200 for resource mapping from PSSCH/PSCCH to PSFCH with dedicated PRBs per RB set. The PSFCH and the PSSCH/PSCCH are in the same RB set for this process 200. Specifically, process 200 is for indexing of PSFCH-dedicated PRBs 200. For clarity of presentation, the description that follows generally describes process 200 in the context of the other figures in this description. For example, process 200 can be performed by a UE 105-1 or 105-2 of FIG. 1. It will be understood that process 200 can be performed, for example, by any suitable system, environment, software, hardware, or a combination of systems, environments, software, and hardware, as appropriate. In some implementations, various steps of process 200 can be run in parallel, in combination, in loops, or in any order.

For sidelink (SL) operation on the unlicensed spectrum, a UE can operate in mode 1 or more 2, where Uu operation for mode 1 occurs using the licensed spectrum only. In this scenario, the channel access mechanisms from the new radio unlicensed spectrum (NR-U) are reused for SL unlicensed operation. The UE is configured to perform SL resource reservation for unlicensed operation within the boundaries of unlicensed channel access mechanism and operation. Each PSFCH transmission occupies 1 common interlace and K3 dedicated PRB(s), where K3 is preconfigured between {1,2, 5} and K3 dedicated PRBs are on the same interlace.

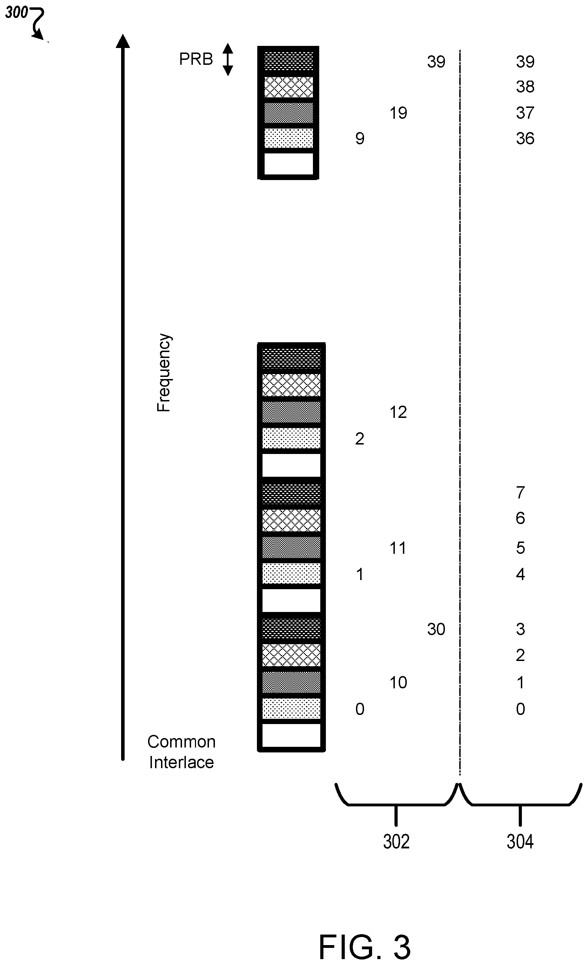

For process 200, operations by the UE are per RB set. The process 200 includes configuring (202) a per-resource block (RB) set operation in which the total number of PSFCH PRBs over an RB set in each PSFCH periodicity is $M_{PRB,set}^{PSFCH}$. The periodicity of the PSFCH PRBs can be 1, 2, or 4, such that a PSFCH resource is every 1 slot, 2 slots, or 4 slots. The PSFCH resources are allocated for multiple users (UEs). Specifically, a total number of PSFCH dedicated PRBs over an RB set in each PSFCH periodicity is $M_{PRB,set}^{PSFCH}$. In some implementations, the resource pool (pre)configures, for each RB set, a total number (A) of interlaces for dedicated PRBs and the number (B) of dedicated PRBs in these interlaces for PSFCH transmissions, where B is an integer multiple of K3. As shown in FIG. 3, the interlaced PRBs are based on how many interlaces are included in the PRB set for PSFCH. A subset (or set) of a set of interlaced PRBs can be used as dedicated PRBs for the PSFCH transmission. In this case, a total number of PSFCH PRBs is $M_{PRB,set}^{PSFCH} = A \cdot B$. In some implementations, the resource pool (pre)configures for each RB set, a total number (C) of dedicated PRBs for PSFCH transmissions in which C is an integer multiple of K3. In this case, the total number of PSFCH dedicated PRBs is $M_{PRB,set}^{PSFCH} = C$. If B or C is not integer multiple of K3, then $\left\lfloor \frac{B}{K_3} \right\rfloor \cdot K_3$ or $\left\lfloor \frac{C}{K_3} \right\rfloor \cdot K_3$ PRBs are used. In some implementations, A, B, and C are derived from the per RB set configurations (e.g., "*sl-PSFCH-RB-set*").

The process 200 for resource mapping from PSSCH/PSCCH to PSFCH with dedicated PRBs includes configuring (204) a total number of PSFCH dedicated PRBs for each PSSCH/PSCCH transmission as being $M_{subch,slot,reTx}^{PSFCH}$, which is larger than or equal to K3. The UE determines a number of PSFCH dedicated PRBs available for multiplexing HARQ-ACK in a PSFCH transmission as being $M_{subch,slot,reTx}^{PSFCH} = \frac{M_{PRB,set}^{PSFCH}}{N_{subch} \cdot N_{PSSCH}^{PSFCH} \cdot N_{reTx}}$,

where $N_{subch}$ is the number of sub-channels in an RB set, $N_{PSSCH}^{PSFCH}$ is the periodicity of PSFCH with values of {1,2,4}, and $N_{reTx}$ is the number of associated candidate PSFCH occasion(s) with values of {1,2,3,4}. In other words, the number of PRBs that are to be dedicated for each PSSCH/PSCCH transmission is the total number of available PSFCH PRBs in the set divided by the number of the PSSCH resources, based on the number of sub-channels and periodicity for the PSSCH and also the number of retransmissions of the PSSCH transmissions.

The process 200 for resource mapping from PSSCH/PSCCH to PSFCH with dedicated PRBs includes indexing (206) PSFCH dedicated PRBs over $M_{PRB,set}^{PSFCH}$ PRBs. In some implementations, the PRBs in an interlace are indexed first. An interlace index second rule is used. In another example, a rule is used to index PRBs in frequency domain.

FIG. 3 illustrates an example of a set 300 of PSFCH PRBs for a corresponding PSSCH/PSCCH transmission. In a first column 302, indices of the PRBs according to the first example in which indexing resource blocks in an interlace first, and an interlace index second rule are shown. In a second column 304, indices of the PRBs according to the frequency domain index rule are shown. Each set of interlaced PRBs is shown as a separate shaded set. As previously stated, a subset or set of the interlaced PRBs can be used for dedicated PSFCH transmissions for each PSSCH/PSCCH transmission. The indices 302 are incremented for the first interlaced set of the PRBs before continuing in the second set of interlaced PRBs.

The process 200 for resource mapping from PSSCH/PSCCH to PSFCH with dedicated PRBs includes allocating (208), by the UE, the set of PSFCH dedicated PRBs for the corresponding PSSCH/PSCCH transmission. In some implementations, the PSSCH/PSCCH transmission is at slot i among the PSSCH/PSCCH slots associated with the PSFCH slot for the *kth* retransmission, and sub-channel *j*, then $0 \leq i < N_{PSSCH}^{PSFCH}$; $0 \leq j < N_{subch}$; $0 \leq k < N_{reTx}$.

In some implementations, the indexing by the UE is configured for increasing slot i first, increasing sub-channel j second, and increasing retransmission k third. The UE allocates the following dedicated PRBs from $M_{PRB,set}^{PSFCH}$ PRBs for PSFCH transmissions:

$$\left[ (i + j \cdot N_{PSSCH}^{PSFCH} + k \cdot N_{subch} \cdot N_{PSSCH}^{PSFCH}) \cdot M_{subch,slot,reTx}^{PSFCH}, (i + 1 + j \cdot N_{PSSCH}^{PSFCH} + k \cdot N_{subch} \cdot N_{PSSCH}^{PSFCH}) \cdot M_{subch,slot,reTx}^{PSFCH} - 1 \right].$$

In some implementations, the indexing by the UE is configured for increasing slot i first, increasing retransmission k second, and increasing sub-channel j third. The UE allocates the following dedicated PRBs from $M_{PRB,set}^{PSFCH}$ PRBs for PSFCH transmissions:

$$\left[ (i + k \cdot N_{PSSCH}^{PSFCH} + j \cdot N_{reTx} \cdot N_{PSSCH}^{PSFCH}) \cdot M_{subch,slot,reTx}^{PSFCH}, (i + 1 + k \cdot N_{PSSCH}^{PSFCH} + j \cdot N_{reTx} \cdot N_{PSSCH}^{PSFCH}) \cdot M_{subch,slot,reTx}^{PSFCH} - 1 \right].$$

In some implementations, the indexing by the UE is configured for increasing sub-channel j first, increasing slot *i* second, increasing retransmission *k* third. The UE allocates the following dedicated PRBs from $M_{PRB,set}^{PSFCH}$ PRBs for PSFCH transmissions:

$$\left[ (j + i \cdot N_{subch} + k \cdot N_{subch} \cdot N_{PSSCH}^{PSFCH}) \cdot M_{subch,slot,reTx}^{PSFCH}, (j + 1 + i \cdot N_{subch} + k \cdot N_{subch} \cdot N_{PSSCH}^{PSFCH}) \cdot M_{subch,slot,reTx}^{PSFCH} - 1 \right].$$

In some implementations, the PSSCH/PSCCH transmission is at slot i among the PSSCH/PSCCH slots associated with the PSFCH slot, and sub-channel j is defined as: $0 \leq i < N_{PSSCH}^{PSFCH} \cdot N_{reTx}$; $0 \leq j < N_{subch}$. In this example, in some implementations, the indexing by the UE is configured for increasing slot i first, increasing sub-channel j second. The UE allocates the following dedicated PRBs from $M_{PRB,set}^{PSFCH}$ PRBs for PSFCH transmissions:

$$\left[(i + j \cdot N_{PSSCH}^{PSFCH} \cdot N_{reTx}) \cdot M_{subch,slot,reTx}^{PSFCH}, (i + 1 + j \cdot N_{PSSCH}^{PSFCH} \cdot N_{reTx}) \cdot M_{subch,slot,reTx}^{PSFCH} - 1\right].$$

In some implementations, the indexing by the UE is configured for increasing the sub-channel j first and increasing slot i second. The UE allocates the following dedicated PRBs from $M_{PRB,set}^{PSFCH}$ PRBs for PSFCH transmissions:

$$\left[(j + i \cdot N_{subch}) \cdot M_{subch,slot,reTx}^{PSFCH}, (j + 1 + i \cdot N_{subch}) \cdot M_{subch,slot,reTx}^{PSFCH} - 1\right].$$

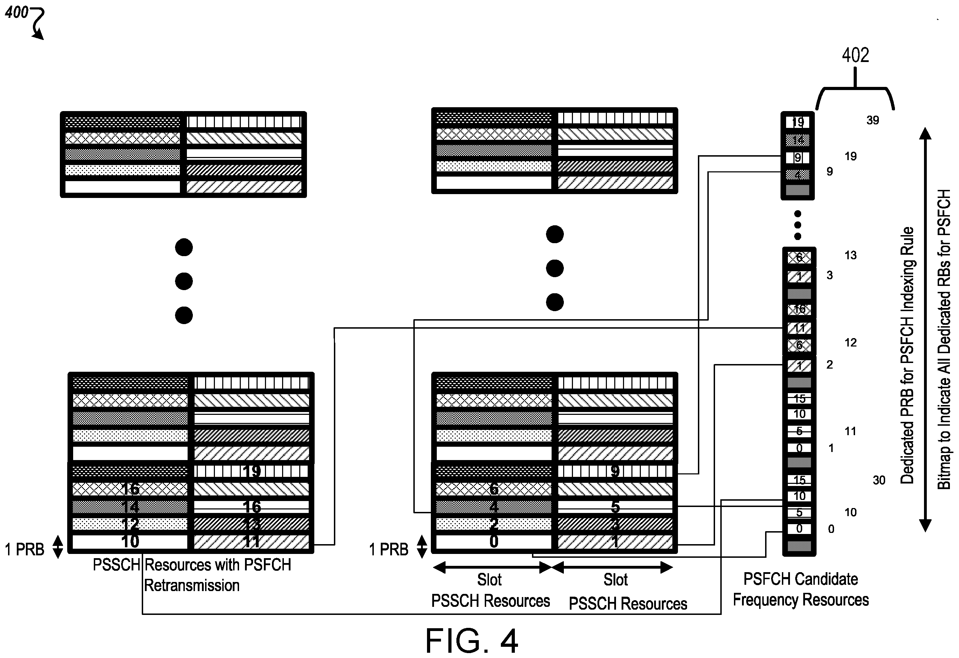

FIG. 4 illustrates an example of indexing a set 400 of PSFCH PRBs for a corresponding PSSCH/PSCCH transmission. In FIG. 4, an example mapping scheme is shown in which the UE is configured for indexing by increasing slot i first, increasing sub-channel j second, and increasing retransmission k third, as previously described. A bitmap 402 is shown that indicates the dedicated RBs for PSFCH. The index values are shown in the bitmap. Here, the periodicity of the PSFCH is 2, so that every two slots of the data transmission, there is a PSFCH transmission. The mapping supports the retransmission of the PSFCH for a PSSCH transmission. The initial transmissions (on the right) and the retransmissions (on the left) each map to PSFCH resources. The indexing first maps initial PSFCH transmissions for PSSCH/PSCCH transmissions to the PRBs of the PSFCH candidate frequency resources. The RB set has five interlaces. For example, a UE can use one interlace for its PSFCH transmissions or retransmissions. The PSSCH slot resources are mapped first, then the subchannel resources, then the retransmissions are mapped to PRBs of the candidate set. The indexing proceeds in the same order. As shown in FIG. 4, a common interlace of the candidate PRB set is skipped for the mapping.

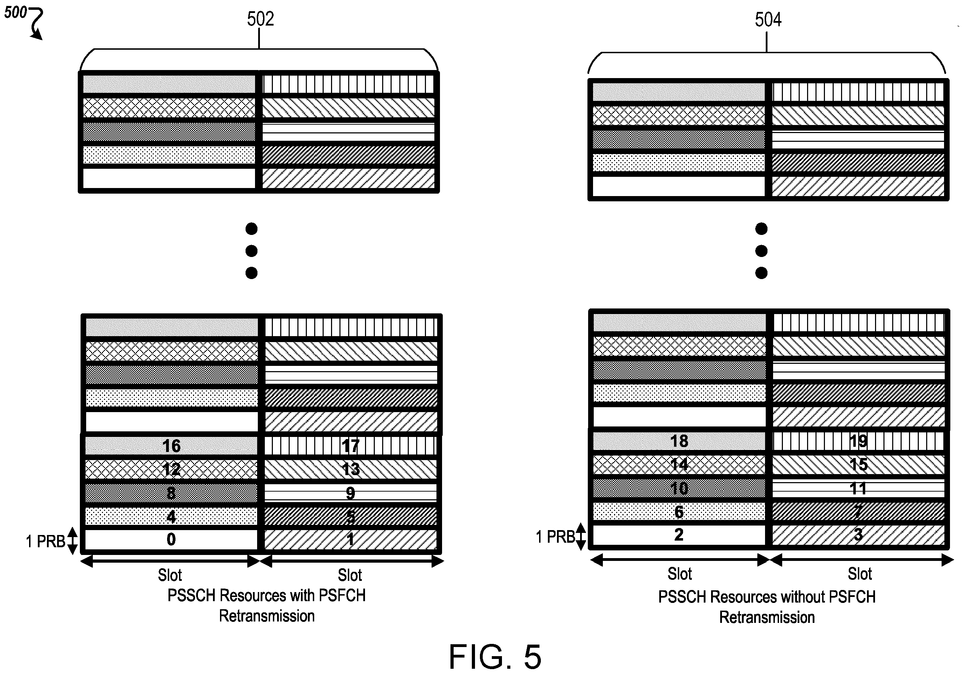

FIG. 5 illustrates an example of indexing a set 500 of PFSCH resources. In a first example, a first indexed set 502 of PSSCH/PSCCH resources is shown with an indexing scheme for PSFCH retransmission. In a second example, a second indexed set 504 of PSSCH/PSCCH resources is shown with an indexing scheme for a scenario with PSFCH initial transmission.

Returning to FIG. 2A, the process 200 for resource mapping from PSSCH/PSCCH to PSFCH with dedicated PRBs includes determining (210), by the UE, several PSFCH resources available for multiplexing HARQ-ACK in a PSFCH transmission. The number of PSFCH resources available is defined as $R_{PRB,CS}^{PSFCH} = N_{type}^{PSFCH} \cdot M_{subch,slot,reTx}^{PSFCH} \cdot N_{CS}^{PSFCH}$, where $N_{CS}^{PSFCH}$ is the configured or pre-configured number of cyclic shift pairs; and $N_{type}^{PSFCH} = 1$ or $N_{subch}^{PSSCH}$ by configuration or pre-configuration.

The process 200 for resource mapping from PSSCH/PSCCH to PSFCH with dedicated PRBs includes indexing (212), by the UE, of the PSFCH resources. In some implementations, the PSFCH resources are first indexed by the UE according to an ascending order of the PRB index. The ascending order is from $N_{type}^{PSFCH} \cdot M_{subch,slot,reTx}^{PSFCH}$ PRBs. The UE then indices the PSFCH resources according to an ascending order of the cyclic shift pair index from $N_{CS}^{PSFCH}$ cyclic shift pairs. In some implementations, the UE first indices the PSFCH resources according to an ascending order of the cyclic shift pair index from $N_{CS}^{PSFCH}$ cyclic shift pairs. The UE then indices according to an ascending order of the PRB index from $N_{type}^{PSFCH} \cdot M_{subch,slot,reTx}^{PSFCH}$ PRBs.

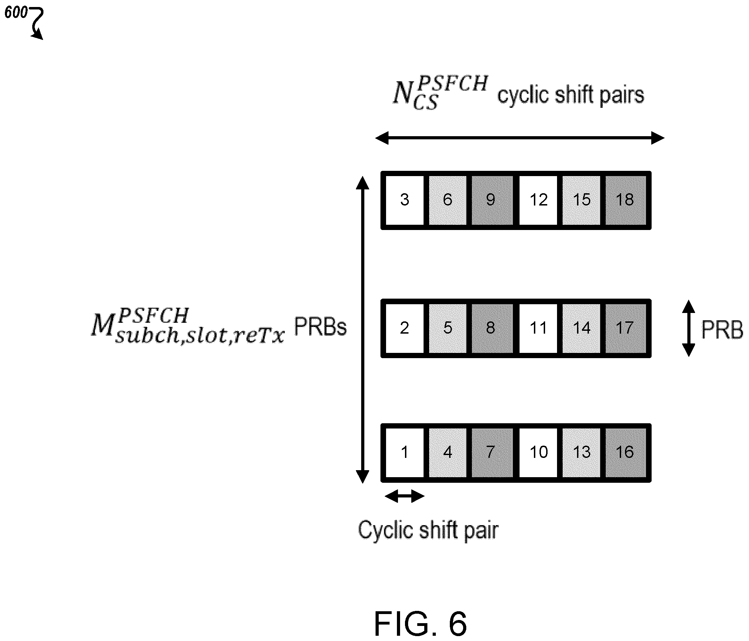

FIG. 6 shows an example of indexing PSFCH resources 600 using a frequency domain first and a cyclic shift domain second. The resources include PRBs set up in $N_{CS}^{PSFCH}$ cyclic shift pairs by $M_{subch,slot,reTx}^{PSFCH}$ PRBs. Example index values are shown on each cyclic shift pair for each PRB, including values from 1 to 18.

The process 200 for resource mapping from PSSCH/PSCCH to PSFCH with dedicated PRBs includes determining (214), by the UE, the indices of PSFCH resources for a PSFCH transmission with HARQ-ACK information in response to a PSSCH/PSCCH reception. The indices are defined as

$$\left[(P_{ID} + M_{ID} \cdot K_3) mod R_{PRB,CS}^{PSFCH}, (P_{ID} + (M_{ID} + 1) \cdot K_3 - 1) mod R_{PRB,CS}^{PSFCH}\right]$$

. Here, $K3$ is the configured or pre-configured number of dedicated PRBs for PSFCH.

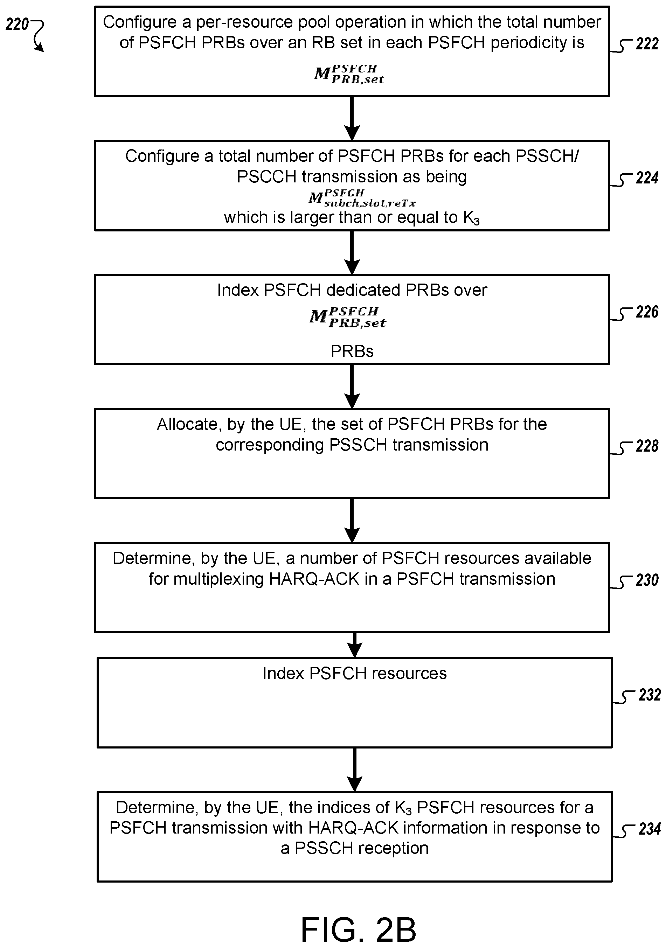

FIG. 2B illustrates an example process 220 for resource mapping from PSSCH/PSCCH to PSFCH with dedicated PRBs per resource pool. For process 220, the PSSCH/PSCCH can be in a first RB set, while the PSFCH is in a second, different RB set. Specifically, process 220 is for indexing of PSFCH-dedicated PRBs 220. For clarity of presentation, the description that follows generally describes process 220 in the context of the other figures in this description. For example, process 220 can be performed by a UE 105-1 or 105-2 of FIG. 1. It will be understood that process 220 can be performed, for example, by any suitable system, environment, software, hardware, or a combination of systems, environments, software, and hardware, as appropriate. In some implementations, various steps of process 220 can be run in parallel, in combination, in loops, or in any order.

The process 220 for resource mapping from PSSCH/PSCCH to PSFCH with dedicated PRBs includes configuring (222) a per-resource pool operation in which the total number of PSFCH dedicated PRBs over a resource pool in each PSFCH periodicity is $M_{PRB,set}^{PSFCH}$. In an example, the resource pool configures or pre-configures a total number (A) of interlaces for dedicated PRBs and the number (B) of dedicated PRBs in these interlaces for PSFCH transmissions. Here, B is an integer multiple of K3. A total number of PSFCH PRBs is $M_{PRB,set}^{PSFCH} = A \cdot B$. In another example, the resource pool configures or pre-configures a total number (C) of dedicated PRBs for PSFCH transmissions, where C is an integer multiple of K3. The total number of PSFCH PRBs is $M_{PRB,set}^{PSFCH} = C$. in some implementations, when B or C is not integer multiple of K3, then $\left\lfloor \frac{B}{K_3} \right\rfloor \cdot K_3$ or $\left\lfloor \frac{C}{K_3} \right\rfloor \cdot K_3$ PRBs are used. The values for A, B, C are derived by the UE from the per RB set configurations (e.g., "*sl-PSFCH-RB-set*").

The process 220 for resource mapping from PSSCH/PSCCH to PSFCH with dedicated PRBs includes configuring (224) a total number of PSFCH PRBs for each PSSCH/PSCCH transmission as being $M_{subch,slot,reTx}^{PSFCH}$, which is larger than or equal to K3. The execution of step 224 can be like the features of the execution of step 204, previously described.

The process 220 for resource mapping from PSSCH/PSCCH to PSFCH with dedicated PRBs includes indexing (226) the PSFCH-dedicated PRBs over $M_{PRB,set}^{PSFCH}$ PRBs. In some implementations, the PRBs in an interlace are in an RB set first, interlace indexed in an RB set second, and indexed in an RB set index third. In some implementations, the PRBs are index in the frequency domain according to a frequency domain rule.

The process 220 for resource mapping from PSSCH/PSCCH to PSFCH with dedicated PRBs includes allocating (228), by the UE, the set of PSFCH PRBs for the corresponding PSSCH/PSCCH transmission. In some implementations, if the PSSCH/PSCCH transmission is at slot i among the PSSCH/PSCCH slots associated with the PSFCH slot for the kth retransmission, and the sub-channel *j* in the pth RB set, then $0 \leq i < N_{PSSCH}^{PSFCH}$ ; $0 \leq j < N_{subch}$ ; $0 \leq k < N_{reTx}$; $0 \leq p < N_{RBset}$, where $N_{RBset}$ is the number of RB sets in a resource pool. In some implementations, the UE is configured to index the RBs by increasing slot i first, increasing sub-channel *j* second, increasing RB set index *p* third, and increasing retransmission *k* fourth. The UE allocates the following dedicated PRBs from $\cdot M_{PRB,set}^{PSFCH}$ PRBs for PSFCH transmissions:

$$\left[(i + j \cdot N_{PSSCH}^{PSFCH} + p \cdot N_{PSSCH}^{PSFCH} \cdot N_{subch} + k \cdot N_{subch} \cdot N_{PSSCH}^{PSFCH} \cdot N_{RBset}) \cdot M_{subch,slot,reTx}^{PSFCH}, (i + \right.$$

$$\left. 1 + j \cdot N_{PSSCH}^{PSFCH} + p \cdot N_{PSSCH}^{PSFCH} \cdot N_{subch} + k \cdot N_{subch} \cdot N_{PSSCH}^{PSFCH} \cdot N_{RBset}) \cdot M_{subch,slot,reTx}^{PSFCH} - 1\right].$$

In some implementations, the UE is configured to index PRBs by increasing slot i first, increasing retransmission *k* second, increasing sub-channel *j* third, and increasing RB set index *p* fourth. In some implementations, the UE is configured to index the PRBs by increasing sub-channel j first, increasing RB set index *p* second, increasing slot *i* third, and increasing retransmission k fourth.

In some implementations, if the PSSCH/PSCCH transmission is at slot i among the PSSCH/PSCCH slots associated with the PSFCH slot, and the sub-channel j in the $p$th RB set, then $0 \leq i < N_{PSSCH}^{PSFCH} \cdot N_{reTx}$, $0 \leq j < N_{subch}$, $0 \leq p < N_{RBset}$.

In some implementations, the UE is configured to index the PRBs by increasing slot i first, increasing sub-channel j second, and increasing RB set index $p$ third. The UE allocates the following dedicated PRBs from $M_{PRB,set}^{PSFCH}$ PRBs for PSFCH transmissions:

$$\left[(i + j \cdot N_{PSSCH}^{PSFCH} \cdot N_{reTx} + p \cdot N_{PSSCH}^{PSFCH} \cdot N_{reTx} \cdot N_{subch}) \cdot M_{subch,slot,reTx}^{PSFCH}, (i + 1 + j \cdot N_{PSSCH}^{PSFCH} \cdot N_{reTx} + p \cdot N_{PSSCH}^{PSFCH} \cdot N_{reTx} \cdot N_{subch}) \cdot M_{subch,slot,reTx}^{PSFCH} - 1\right].$$

In some implementations, the UE indexes the PRBs by increasing sub-channel j first, increasing RB set index $p$ second, and increasing slot $i$ third.

The process 220 for resource mapping from PSSCH/PSCCH to PSFCH with dedicated PRBs includes determining (230), by the UE, a number of PSFCH resources available for multiplexing HARQ-ACK in a PSFCH transmission. This step is similar to step 210 described previously in relation to FIG. 2A. The number of PSFCH resources available is defined as $R_{PRB,CS}^{PSFCH} = N_{type}^{PSFCH} \cdot M_{subch,slot,reTx}^{PSFCH} \cdot N_{CS}^{PSFCH}$, where $N_{CS}^{PSFCH}$ is the configured or pre-configured number of cyclic shift pairs; and $N_{type}^{PSFCH} = 1$ or $N_{subch}^{PSSCH}$ by configuration or pre-configuration.

The process 220 for resource mapping from PSSCH/PSCCH to PSFCH with dedicated PRBs includes indexing (232), by the UE, of the PSFCH resources. This step is similar to step 212 described previously in relation to FIG. 2A. In some implementations, the PSFCH resources are first indexed by the UE according to an ascending order of the PRB index. The ascending order is from $N_{type}^{PSFCH} \cdot M_{subch,slot,reTx}^{PSFCH}$ PRBs. The UE then indices the PSFCH resources according to an ascending order of the cyclic shift pair index from $N_{CS}^{PSFCH}$ cyclic shift pairs. In some implementations, the UE first indices the PSFCH resources according to an ascending order of the cyclic shift pair index from $N_{CS}^{PSFCH}$ cyclic shift pairs. The UE then indices according to an ascending order of the PRB index from $N_{type}^{PSFCH} \cdot M_{subch,slot,reTx}^{PSFCH}$ PRBs.

The process 220 for resource mapping from PSSCH/PSCCH to PSFCH with dedicated PRBs includes determining (234), by the UE, the indices of PSFCH resources for a PSFCH transmission with HARQ-ACK information in response to a PSSCH/PSCCH reception. This step is similar to step 214 described previously in relation to FIG. 2A. The indices are defined as $\left[(P_{ID} + M_{ID} \cdot K_3) mod R_{PRB,CS}^{PSFCH}, (P_{ID} + (M_{ID} + 1) \cdot K_3 - 1) mod R_{PRB,CS}^{PSFCH}\right]$. Here, K3 is the configured or pre-configured number of dedicated PRBs for PSFCH.

In an aspect, the PSSCH-PSFCH mapping is for the case where each PSFCH transmission occupies one common interlace and K3 dedicated PRBs. The process includes, for determining the number dedicated PSFCH PRBs, considering a number of candidate PSFCH occasions for a PSCCH/PSSCH transmission is considered. The process includes indexing of PSFCH dedicated PRBs that follows increasing PRB index in an interlace first and interlace index second rule. The process includes indexing of PSCCH/PSSCH resources that follows increasing slot index first and sub-channel index second rule, where a single PSFCH slot is used for all the candidate PSFCH occasions. The process includes indexing of PSFCH resources follows increasing PRB index first and cyclic shift pair index second rule. The process includes, for each receiver UE in groupcast, feedback Option 2 occurs K3 PSFCH resources with consecutive indexes. In some implementations, when each PSFCH transmission occupies 1 common interlace and K3 dedicated PRBs, some details on the common interlace needs to be examined. In some implementations, the index of common interlace could be (pre)configured per resource pool. When a resource pool is composed of multiple RB sets, then the same common interlace index is across these RB sets. For determining the cyclic shift for the PSFCH sequence on common interlace, the $m_0$ value and the $m_{CS}$ value for determining the cyclic shift for PSFCH sequence on common interlace could be (pre)configured per resource pool.

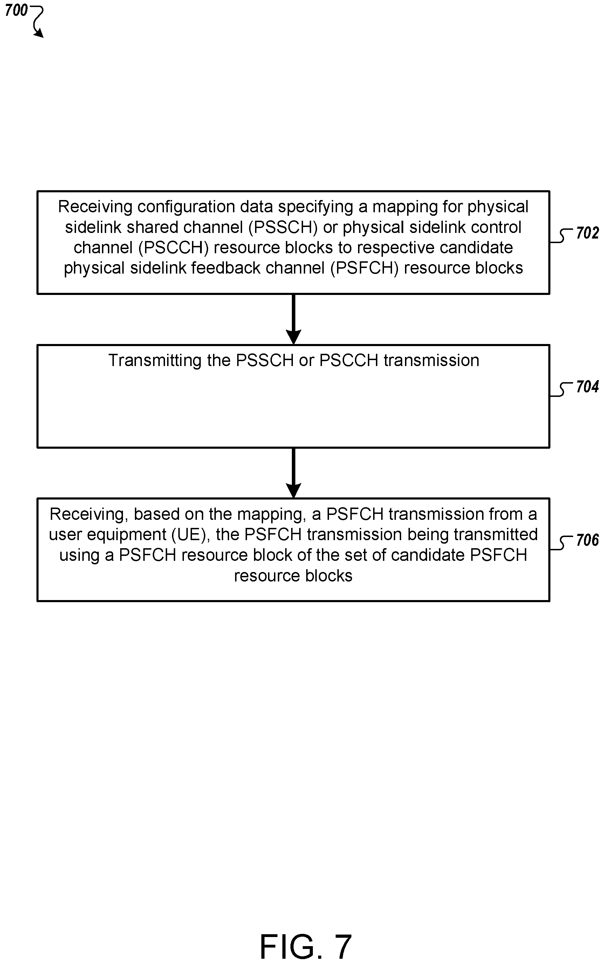

FIG. 7 illustrates a flowchart of an example method 700, according to some implementations. For clarity of presentation, the description that follows generally describes method 700 in the context of the other figures in this description. For example, method 700 can be performed by UE 105 of FIG. 1. It will be understood that method 700 can be performed, for example, by any suitable system, environment, software, hardware, or a combination of systems, environments, software, and hardware, as appropriate. In some implementations, various steps of method 700 can be run in parallel, in combination, in loops, or in any order.

Method 700 includes receiving (702) configuration data specifying a mapping for physical sidelink shared channel (PSSCH) or physical sidelink control channel (PSCCH) resource blocks to respective candidate physical sidelink feedback channel (PSFCH) resource blocks. The mapping specifies, for a PSSCH or PSCCH transmission, a set of candidate PSFCH resource blocks. The set of candidate PSFCH resource blocks include a common interlace resource block and a set of dedicated resource blocks for PSFCH transmissions. Method 700 includes transmitting (704) the PSSCH or PSCCH transmission. Method 700 includes receiving (706), based on the mapping, a PSFCH transmission from a user equipment (UE), the PSFCH transmission being transmitted using a PSFCH resource block of the set of candidate PSFCH resource blocks.

In some implementations, for operations with shared spectrum channel access, when *sl-TransmissionStructureForPSFCH* = 'commonInterlace' and within RB-set k, a UE determines a subset of PRBs in a first interlace and, based on the *sl-PSFCH-RB-SetList*, a subset of $N^{PSFCH}_{PRB}$ PRBs in a second interlace for a PSFCH transmission with HARQ-ACK information in a resource pool, or base don sl-IUC-RB-SetList, a subset of $N^{PSFCH}_{PRB}$ PRBs in a second interlace for a PSFCH transmission with conflict information in a resource pool. An index of the first interlace is provided by *sl-PSFCH-CommonInterlaceIndex*. The $N^{PSFCH}_{PRB}$ PRBs in the second interlace are provided by *sl-NumDedicatedPRBs-for-PSFCH* where, for the nth candidate PSFCH transmission occasion, $1 \leq n \leq N^{PSFCH}_{occasion}$, and for each interlace l, the UE determines $M^{PSFCH}_{PRB,k,l}$ PRBs based on the nth indication provided by *sl-PSCH-RB-SetList* or *sl-IUC-RB-SetList* for HARQ-ACK information or conflict information, respectively. The UE expects that different subsets of $N^{PSFCH,n}_{PSB,k,l}$ is a multiple of $N^{PSFCH}_{PRB}$. For interlace l, the UE determines a PRB subset with index s to include PRBs $\{N^{PSFCH}_{PRB} \cdot s, N^{PSFCH}_{PRB} \cdot s + 1, ..., N^{PSFCH}_{PRB} \cdot (s+1) - 1\}$, $0 \leq s \leq M^{PSFCH,n}_{PRB,k,l} / N^{PSFCH}_{PRB} - 1$. The UE determines the $M^{PSFCH,n}_{PRB,k,l}$ PRB subsets by ordering the PRB subsets first in an ascending order of PRB subset index within an interlace and second in ascending order of interlace index, where $M^{PSFCH,n}_{subset,k} = \Sigma_l M^{PSFCH,n}_{PRB,k,l} / N^{PSFCH}_{PRB}$. For a number of $N^k_{subch}$ subchannels in RB-set k and a number of slots for PSSCH transmissions that is not larger than $N^{PSFCH}_{PSSCH}$ and is associated with a slot for PSFCH transmission, the UE allocates the $\{(i + j \cdot N^{PSFCH}_{PSSCH}) \cdot M^{PSFCH,n}_{subch,slot,k}, (i+j \cdot N^{PSFCH}_{PSSCH}) \cdot M^{PSFCH,n}_{subch,slot,k} + 1, ..., (i+1+j \cdot N^{PSFCH}_{PSSCH}) \cdot M^{PSFCH,n}_{subch,slot,k} - 1\}$ PRB subsets from the $M^{PSFCH,n}_{subset,k}$ PRB subsets to slot i among the slots for PSSCH transmissions that are associated with the slot and subchannel j for PSFCH transmissions, where $M^{PSFCH,n}_{subch,slot,k} = M^{PSFCH,N}_{subset,k} / (N^k_{subch} \cdot N^{PSFCH}_{PSSCH})$ and $0 \leq i \leq N^{PSFCH}_{PSSCH}$, $0 \leq j \leq N^k_{subch}$. The allocation starts in an ascending order of i and continues in an ascending order of j. The UE expects that $M^{PSFCH,n}_{subset,k}$ is a multiple of $N^k_{subch} \cdot N^{PSFCH}_{PSSCH}$.

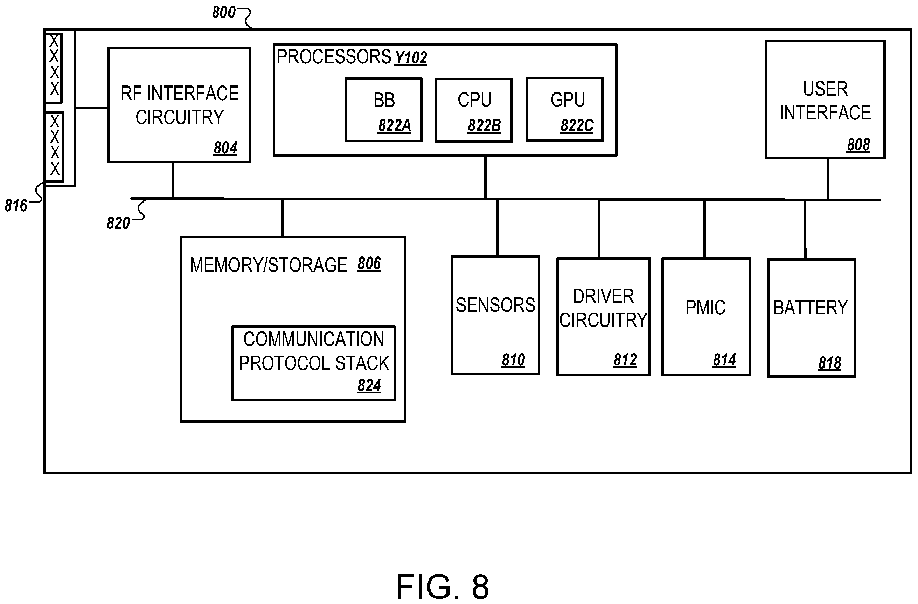

FIG. 8 illustrates an example UE 800, according to some implementations. The UE 800 may be similar to and substantially interchangeable with UE 102 of FIG. 1.

The UE 800 may be any mobile or non-mobile computing device, such as, for example, mobile phones, computers, tablets, industrial wireless sensors (for example, microphones, pressure sensors, thermometers, motion sensors, accelerometers, inventory sensors, electric voltage/current meters, etc.), video devices (for example, cameras, video cameras, etc.), wearable devices (for example, a smart watch), relaxed-IoT devices.

The UE 800 may include processors 802, RF interface circuitry 804, memory/storage 806, user interface 808, sensors 810, driver circuitry 812, power management integrated circuit (PMIC) 814, one or more antenna(s) 816, and battery 818. The components of the UE 800 may be implemented as integrated circuits (ICs), portions thereof, discrete electronic devices, or other modules, logic, hardware, software, firmware, or a combination thereof. The block diagram of FIG. 8 is intended to show a high-level view of some of the components of the UE 800. However, some of the components shown may be omitted, additional components may be present, and different arrangement of the components shown may occur in other implementations.

The components of the UE 800 may be coupled with various other components over one or more interconnects 820, which may represent any type of interface, input/output, bus (local, system, or expansion), transmission line, trace, optical connection, etc. that allows various circuit components (on common or different chips or chipsets) to interact with one another.

The processors 802 may include processor circuitry such as, for example, baseband processor circuitry (BB) 822A, central processor unit circuitry (CPU) 822B, and graphics processor unit circuitry (GPU) 822C. The processors 802 may include any type of circuitry or processor circuitry that executes or otherwise operates computer-executable instructions, such as program code, software modules, or functional processes from memory/storage 806 to cause the UE 800 to perform operations as described herein.

In some implementations, the baseband processor circuitry 822A may access a communication protocol stack 824 in the memory/storage 806 to communicate over a 3GPP compatible network. In general, the baseband processor circuitry 822A may access the communication protocol stack to perform user plane functions at a physical (PHY) layer, medium access control (MAC) layer, radio link control (RLC) layer, packet data convergence protocol (PDCP) layer, service data adaptation protocol (SDAP) layer, and PDU layer; and perform control plane functions at a PHY layer, MAC layer, RLC layer, PDCP layer, RRC layer, and a non-access stratum layer. In some implementations, the PHY layer operations may additionally/alternatively be performed by the components of the RF interface circuitry 804. The baseband processor circuitry 822A may generate or process baseband signals or waveforms that carry information in 3GPP-compatible networks. In some implementations, the waveforms for NR may be based cyclic prefix orthogonal frequency division multiplexing (OFDM) "CP-OFDM" in the uplink or downlink, and discrete Fourier transform spread OFDM "DFT-S-OFDM" in the uplink.

The memory/storage 806 may include one or more non-transitory, computer-readable media that includes instructions (for example, communication protocol stack 824) that may be executed by one or more of the processors 802 to cause the UE 800 to perform various operations described herein. The memory/storage 806 include any type of volatile or non-volatile memory that may be distributed throughout the UE 800. In some implementations, some of the memory/storage 806 may be located on the processors 802 themselves (for example, L1 and L2 cache), while other memory/storage 806 is external to the processors 802 but accessible thereto via a memory interface. The memory/storage 806 may include any suitable volatile or non-volatile memory such as, but not limited to, dynamic random-access memory (DRAM), static random-access memory (SRAM), erasable programmable read only memory (EPROM), electrically erasable programmable read only memory (EEPROM), Flash memory, solid-state memory, or any other type of memory device technology.

The RF interface circuitry 804 may include transceiver circuitry and radio frequency front module (RFEM) that allows the UE 800 to communicate with other devices over a radio access network. The RF interface circuitry 804 may include various elements arranged in transmit or receive paths. These elements may include, for example, switches, mixers, amplifiers, filters, synthesizer circuitry, control circuitry, etc.

In the receive path, the RFEM may receive a radiated signal from an air interface via antenna(s) 816 and proceed to filter and amplify (with a low-noise amplifier) the signal. The signal may be provided to a receiver of the transceiver that downconverts the RF signal into a baseband signal that is provided to the baseband processor of the processors 802.

In the transmit path, the transmitter of the transceiver up-converts the baseband signal received from the baseband processor and provides the RF signal to the RFEM. The RFEM may amplify the RF signal through a power amplifier prior to the signal being radiated across the air interface via the antenna(s) 816. In various implementations, the RF interface circuitry 804 may be configured to transmit/receive signals in a manner compatible with NR access technologies.

The antenna(s) 816 may include one or more antenna elements to convert electrical signals into radio waves to travel through the air and to convert received radio waves into electrical signals. The antenna elements may be arranged into one or more antenna panels. The antenna(s) 816 may have antenna panels that are omnidirectional, directional, or a combination thereof to enable beamforming and multiple input, multiple output communications. The antenna(s) 816 may include microstrip antennas, printed antennas fabricated on the surface of one or more printed circuit boards, patch antennas, phased array antennas, etc. The antenna(s) 816 may have one or more panels designed for specific frequency bands including bands in FR1 or FR2.

The user interface 808 includes various input/output (I/O) devices designed to enable user interaction with the UE 800. The user interface 808 includes input device circuitry and output device circuitry. Input device circuitry includes any physical or virtual means for accepting an input including, inter alia, one or more physical or virtual buttons (for example, a reset button), a physical keyboard, keypad, mouse, touchpad, touchscreen, microphones, scanner, headset, or the like. The output device circuitry includes any physical or virtual means for showing information or otherwise conveying information, such as sensor readings, actuator position(s), or other like information. Output device circuitry may include any number or combinations of audio or visual display, including, inter alia, one or more simple visual outputs/indicators (for example, binary status indicators such as light emitting diodes "LEDs" and multi-character visual outputs), or more complex outputs such as display devices or touchscreens (for example, liquid crystal displays "LCDs," LED displays, quantum dot displays, projectors, etc.), with the output of characters, graphics, multimedia objects, and the like being generated or produced from the operation of the UE 800.

The sensors 810 may include devices, modules, or subsystems whose purpose is to detect events or changes in its environment and send the information (sensor data) about the detected events to some other device, module, subsystem, etc. Examples of such sensors include, inter alia, inertia measurement units including accelerometers, gyroscopes, or magnetometers; microelectromechanical systems or nanoelectromechanical systems including 3-axis accelerometers, 3-axis gyroscopes, or magnetometers; level sensors; temperature sensors (for example, thermistors); pressure sensors; image capture devices (for example, cameras or lensless apertures); light detection and ranging sensors; proximity sensors (for example, infrared radiation detector and the like); depth sensors; ambient light sensors;

ultrasonic transceivers; microphones or other like audio capture devices; etc.

The driver circuitry 812 may include software and hardware elements that operate to control devices that are embedded in the UE 800, attached to the UE 800, or otherwise communicatively coupled with the UE 800. The driver circuitry 812 may include individual drivers allowing other components to interact with or control various input/output (I/O) devices that may be present within, or connected to, the UE 800. For example, driver circuitry 812 may include a display driver to control and allow access to a display device, a touchscreen driver to control and allow access to a touchscreen interface, sensor drivers to obtain sensor readings of sensors 810 and control and allow access to sensors 810, drivers to obtain actuator positions of electro-mechanic components or control and allow access to the electro-mechanic components, a camera driver to control and allow access to an embedded image capture device, audio drivers to control and allow access to one or more audio devices.

The PMIC 814 may manage power provided to various components of the UE 800. With respect to the processors 802, the PMIC 814 may control power-source selection, voltage scaling, battery charging, or DC-to-DC conversion.

In some implementations, the PMIC 814 may control, or otherwise be part of, various power saving mechanisms of the UE 800. A battery 818 may power the UE 800, although in some examples the UE 800 may be mounted deployed in a fixed location and may have a power supply coupled to an electrical grid. The battery 818 may be a lithium-ion battery, a metal-air battery, such as a zinc-air battery, an aluminum-air battery, a lithium-air battery, and the like. In some implementations, such as in vehicle-based applications, the battery 818 may be a typical lead-acid automotive battery.

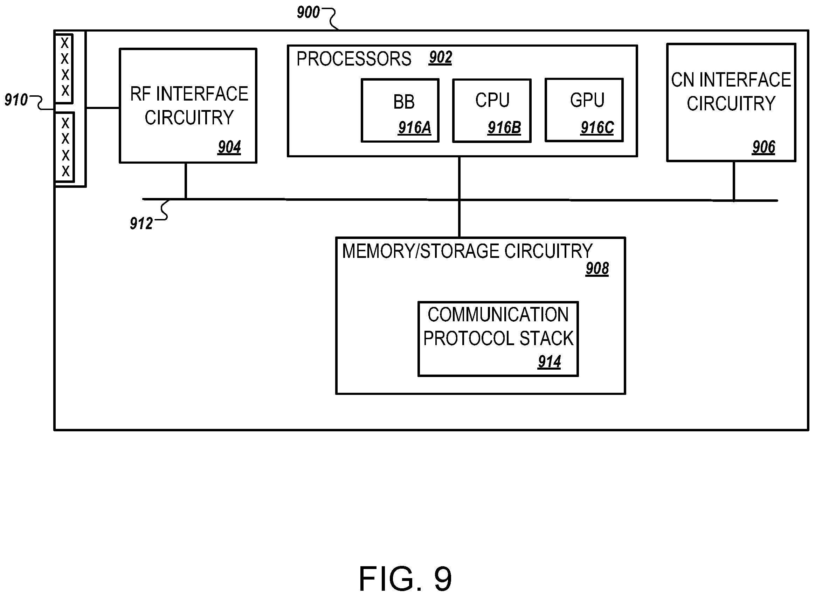

FIG. 9 illustrates an example access node 900 (e.g., a base station or gNB), according to some implementations. The access node 900 may be like and substantially interchangeable with base station 104. The access node 900 may include processors 902, RF interface circuitry 904, core network (CN) interface circuitry 906, memory/storage circuitry 908, and one or more antenna(s) 910.

The components of the access node 900 may be coupled with various other components over one or more interconnects 912. The processors 902, RF interface circuitry 904, memory/storage circuitry 908 (including communication protocol stack 914), antenna(s) 910, and interconnects 912 may be like like-named elements shown and described with respect to FIG. 8. For example, the processors 902 may include processor circuitry such as, for example, baseband processor circuitry (BB) 916A, central processor unit circuitry (CPU) 916B, and graphics processor unit circuitry (GPU) 916C.

The CN interface circuitry 906 may provide connectivity to a core network, for example, a 5th Generation Core network (5GC) using a 5GC-compatible network interface protocol such as carrier Ethernet protocols, or some other suitable protocol. Network connectivity may be provided to/from the access node 900 via a fiber optic or wireless backhaul. The CN interface circuitry 906 may include one or more dedicated processors or FPGAs to communicate using one or more of the protocols. In some implementations, the CN interface circuitry 906 may include multiple controllers to provide connectivity to other networks using the same or different protocols.

As used herein, the terms "access node," "access point," or the like may describe equipment that provides the radio baseband functions for data and/or voice connectivity between a network and one or more users. These access nodes can be referred to as BS, gNBs, RAN nodes, eNBs, NodeBs, RSUs, TRxPs or TRPs, and so forth, and can include ground stations (e.g., terrestrial access points) or satellite stations providing coverage within a geographic area (e.g., a cell). As used herein, the term "NG RAN node" or the like may refer to an access node 900 that operates in an NR or 5G system (for example, a gNB), and the term "E-UTRAN node" or the like may refer to an access node 900 that operates in an LTE or 4G system (e.g., an eNB). According to various implementations, the access node 900 may be implemented as one or more of a dedicated physical device such as a macrocell base station, and/or a low power (LP) base station for providing femtocells, picocells or other like cells having smaller coverage areas, smaller user capacity, or higher bandwidth compared to macrocells.

In some implementations, all or parts of the access node 900 may be implemented as one or more software entities running on server computers as part of a virtual network, which may be referred to as a CRAN and/or a virtual baseband unit pool (vBBUP). In V2X scenarios, the access node 900 may be or act as a "Roadside Unit." The term "Roadside Unit" or "RSU" may refer to any transportation infrastructure entity used for V2X communications. An RSU may be implemented in or by a suitable RAN node or a stationary (or relatively stationary) UE, where an RSU implemented in or by a UE may be referred to as a "UE-type RSU," an RSU implemented in or by an eNB may be referred to as an "eNB-type RSU," an RSU implemented in or by a gNB may be referred to as a "gNB-type RSU," and the like.

Various components may be described as performing a task or tasks, for convenience in the description. Such descriptions should be interpreted as including the phrase "configured to." Reciting a component that is configured to perform one or more tasks is expressly intended not to invoke 35 U.S.C. § 112(f) interpretation for that component.

For one or more embodiments, at least one of the components set forth in one or more of the preceding figures may be configured to perform one or more operations, techniques, processes, or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

It is well understood that the use of personally identifiable information should follow privacy policies and practices that are generally recognized as meeting or exceeding industry or governmental requirements for maintaining the privacy of users. Personally identifiable information data should be managed and handled so as to minimize risks of unintentional or unauthorized access or use, and the nature of authorized use should be clearly indicated to users.

Further relevant disclosure is set out in the following numbered clauses:-

1. One or more processors configured for wireless communication by performing operations comprising:

receiving configuration data specifying a mapping for sidelink resource blocks to respective candidate physical sidelink feedback channel (PSFCH) resource blocks, the mapping specifying, for a sidelink transmission, a set of candidate PSFCH resource blocks, the set of candidate PSFCH resource blocks including a common interlace resource block and a set of dedicated resource blocks for PSFCH transmissions;
encoding the sidelink transmission; and
decoding, based on the mapping, a PSFCH transmission, the PSFCH transmission being transmitted using a PSFCH resource block of the set of candidate PSFCH resource blocks.

2. The one or more processors of clause 1, wherein the set of candidate PSFCH resource blocks are in a same resource block set.

3. The one or more processors any preceding clause, wherein the mapping specifies, for a resource block set, a total number of interlaces for the dedicated resource blocks and a total number of resource blocks in each interlace that are candidate dedicated resource blocks.

4. The one or more processors of any preceding clause, wherein the mapping specifies, for a resource block set, a total number of candidate dedicated resource blocks for the PSFCH transmissions.

5. The one or more processors of any preceding clause, the operations further comprising:
determining a number of PSFCH dedicated resource blocks available for multiplexing HARQ-ACK in a PSFCH transmission for a sidelink transmission as $M^{PSFCH}_{subch,slot,reTx} = \dfrac{M^{PSFCH}_{PRB,set}}{N_{subch} \cdot N^{PSFCH}_{PSSCH} \cdot N_{reTx}}$, where $N_{subch}$ is the number of sub-channels in the resource block set, $N^{PSFCH}_{PSSCH}$ is a periodicity of the PSFCH transmissions having values of {1,2,4}, and $N_{reTx}$ is a number of candidate PSFCH occasions having values of {1,2,3,4}.

6. The one or more processors of any preceding clause, the operations further comprising indexing, based on the mapping of the configuration data, the set of candidate PSFCH dedicated resource blocks.

7. The one or more processors of clause 6, wherein the indexing comprises indexing resource blocks in a first interlace before indexing resource blocks in a second interlace.

8. The one or more processors of clause 6, wherein the indexing comprises: indexing resource blocks in a frequency domain.

9. The one or more processors of any preceding clause, the operations further comprising: allocating a set of PSFCH resource blocks for a physical sidelink shared channel (PSSCH) or physical sidelink control channel (PSCCH) transmission of the sidelink transmission, wherein allocating the set of PSFCH resource blocks comprises:

incrementing an index over PSSCH slots associated with a PSFCH slot;
after incrementing the index over the PSSCH slots, incrementing the index over subchannels associated with the PSFCH slot; and
after incrementing the index over the subchannels, incrementing the index over retransmission instances associated with the PSFCH slot.

10. The one or more processors of any preceding clause, the operations further comprising:

allocating a set of PSFCH resource blocks for a physical sidelink shared channel (PSSCH) or physical sidelink control channel (PSCCH) sidelink transmission, wherein allocating the set of PSFCH resource blocks comprises:

incrementing an index over PSSCH slots associated with a PSFCH slot;
after incrementing the index over the PSSCH slots, incrementing the index over retransmission instances associated with the PSFCH slot; and
after incrementing the index over the PSSCH slots, incrementing the index over subchannels associated with the PSFCH slot.

11. The one or more processors of any preceding clause, the operations further comprising:
allocating a set of PSFCH resource blocks for a physical sidelink shared channel (PSSCH) or physical sidelink control channel (PSCCH) sidelink transmission, wherein allocating the set of PSFCH resource blocks comprises:

incrementing an index over subchannels associated with a PSFCH slot;
after incrementing the index over the subchannels, incrementing the index over PSSCH slots associated with the PSFCH slot; and
after incrementing the index over the PSSCH slots, incrementing the index over retransmission instances associated with the PSFCH slot.

12. The one or more processors of any preceding clause, the operations further comprising:
allocating a set of PSFCH resource blocks for a physical sidelink shared channel (PSSCH) or physical sidelink control channel (PSCCH) sidelink transmission, wherein allocating the set of PSFCH resource blocks comprises:

incrementing an index over PSSCH slots associated with a PSFCH slot; and
after incrementing the index over the PSSCH slots, incrementing the index over subchannels associated with the PSFCH slot.

13. The one or more processors of any preceding clause, the operations further comprising:
allocating a set of PSFCH resource blocks for a physical sidelink shared channel (PSSCH) or physical sidelink control channel (PSCCH) sidelink transmission, wherein allocating the set of PSFCH resource blocks comprises:

incrementing an index over subchannels associated with a PSFCH slot; and
after to incrementing the index over the subchannels, incrementing the index over PSSCH slots associated with the PSFCH slot.

14. The one or more processors of any preceding clause, the operations further comprising:
determining a number of PSFCH resources available for multiplexing HARQ-ACK in the PSFCH transmission based on a resource block index and based on a cyclic shift pair index.

15. The one or more processors of clause 14, the operations further comprising indexing the PSFCH resource blocks first in ascending order based on the resource block index and second in ascending order based on the cyclic shift pair index.

16. The one or more processors of clause 14, the operations further comprising indexing the PSFCH resource blocks first in ascending order based on the resource block index and second in ascending order based on the cyclic shift pair index.

17. The one or more processors of any preceding clause, the operations further comprising:
allocating a set of PSFCH resource blocks for a physical sidelink shared channel (PSSCH) or physical sidelink control channel (PSCCH) sidelink transmission, wherein allocating the set of PSFCH resource blocks comprises:

incrementing an index over PSSCH slots associated with a PSFCH slot;
responsive to incrementing the index over the PSSCH slots, incrementing the index over subchannels associated with the PSFCH slot; and
responsive to incrementing the index over the subchannels, incrementing the index over resource block sets associated with the PSFCH slot.

18. The one or more processors of any preceding clause, the operations further comprising:

allocating a set of PSFCH resource blocks for a physical sidelink shared channel (PSSCH) or physical sidelink control channel (PSCCH) sidelink transmission, wherein allocating the set of PSFCH resource blocks comprises:

incrementing an index over subchannels associated with a PSFCH slot;
after incrementing the index over the subchannels, incrementing the index over resource block sets associated with the PSFCH slot; and
after incrementing the index over the resource block sets, incrementing the index over PSSCH slots associated with the PSFCH slot.

19. An apparatus comprising one or more processors configured for wireless communication by performing operations comprising:

receiving configuration data specifying a mapping for sidelink resource blocks to respective candidate physical sidelink feedback channel (PSFCH) resource blocks, the mapping specifying, for a sidelink transmission, a set of candidate PSFCH resource blocks, the set of candidate PSFCH resource blocks including a common interlace resource block and a set of dedicated resource blocks for PSFCH transmissions;
encoding the sidelink transmission; and
decoding, based on the mapping, a PSFCH transmission, the PSFCH transmission being transmitted using a PSFCH resource block of the set of candidate PSFCH resource blocks.

20. The apparatus of clause 19, the operations further comprising indexing, based on the mapping of the configuration data, the set of candidate PSFCH dedicated resource blocks, wherein the indexing comprises indexing resource blocks in a first interlace before indexing resource blocks in a second interlace.

**Claims**

1. One or more processors configured for wireless communication by performing operations comprising:

receiving configuration data specifying a mapping for sidelink resource blocks to respective candidate physical sidelink feedback channel, PSFCH, resource blocks, the mapping specifying, for a sidelink transmission, a set of candidate PSFCH resource blocks, the set of candidate PSFCH resource blocks including a common interlace resource block and a set of dedicated resource blocks for PSFCH transmissions;
encoding the sidelink transmission; and
decoding, based on the mapping, a PSFCH transmission, the PSFCH transmission being transmitted using a PSFCH resource block of the set of candidate PSFCH resource blocks.

2. The one or more processors of claim 1, wherein the mapping specifies, for a resource block set, a total number of interlaces for the dedicated resource blocks and a total number of resource blocks in each interlace that are candidate dedicated resource blocks.

3. The one or more processors of claim 1 or claim 2, wherein the mapping specifies, for a resource block set, a total number of candidate dedicated resource blocks for the PSFCH transmissions.

4. The one or more processors of any preceding claim, the operations further comprising:
determining a number of PSFCH dedicated resource blocks available for multiplexing HARQ-ACK in a PSFCH transmission for a sidelink transmission as
$$M_{subch,slot,reTx}^{PSFCH} = \frac{M_{PRB,set}^{PSFCH}}{N_{subch} \cdot N_{PSSCH}^{PSFCH} \cdot N_{reTx}}$$
, where $N_{subch}$ is the number of sub-channels in the resource block set, $N_{PSSCH}^{PSFCH}$ is a periodicity of the PSFCH transmissions having values of {1,2,4}, and $N_{reTx}$ is a number of candidate PSFCH occasions having values of {1,2,3,4}.

5. The one or more processors of claim 4, wherein the indexing comprises indexing resource blocks in a first interlace before indexing resource blocks in a second interlace.

6. The one or more processors of claim 4, wherein the indexing comprises: indexing resource blocks in a frequency domain.

7. The one or more processors of any preceding claim, the operations further comprising: allocating a set of PSFCH resource blocks for a physical sidelink shared channel, PSSCH, or physical sidelink control channel, PSCCH, transmission of the sidelink transmission, wherein allocating the set of PSFCH resource blocks comprises:

   incrementing an index over PSSCH slots associated with a PSFCH slot;
   responsive to incrementing the index over the PSSCH slots, incrementing the index over subchannels associated with the PSFCH slot; and
   responsive to incrementing the index over the subchannels, incrementing the index over retransmission instances associated with the PSFCH slot.

8. The one or more processors of any preceding claim, the operations further comprising:
   allocating a set of PSFCH resource blocks for a physical sidelink shared channel, PSSCH, or physical sidelink control channel, PSCCH, sidelink transmission, wherein allocating the set of PSFCH resource blocks comprises:

   incrementing an index over PSSCH slots associated with a PSFCH slot;
   after incrementing the index over the PSSCH slots, incrementing the index over retransmission instances associated with the PSFCH slot; and
   after incrementing the index over the PSSCH slots, incrementing the index over subchannels associated with the PSFCH slot.

9. The one or more processors of any preceding claim, the operations further comprising:
   allocating a set of PSFCH resource blocks for a physical sidelink shared channel, PSSCH, or physical sidelink control channel, PSCCH, sidelink transmission, wherein allocating the set of PSFCH resource blocks comprises:

   incrementing an index over subchannels associated with a PSFCH slot;
   after incrementing the index over the subchannels, incrementing the index over PSSCH slots associated with the PSFCH slot; and
   after incrementing the index over the PSSCH slots, incrementing the index over retransmission instances associated with the PSFCH slot.

10. The one or more processors of any preceding claim, the operations further comprising:
    allocating a set of PSFCH resource blocks for a physical sidelink shared channel, PSSCH, or physical sidelink control channel, PSCCH, sidelink transmission, wherein allocating the set of PSFCH resource blocks comprises:

    incrementing an index over PSSCH slots associated with a PSFCH slot; and
    after incrementing the index over the PSSCH slots, incrementing the index over subchannels associated with the PSFCH slot.

11. The one or more processors of any preceding claim, the operations further comprising:
    allocating a set of PSFCH resource blocks for a physical sidelink shared channel, PSSCH, or physical sidelink control channel, PSCCH, sidelink transmission, wherein allocating the set of PSFCH resource blocks comprises:

    incrementing an index over subchannels associated with a PSFCH slot; and
    after to incrementing the index over the subchannels, incrementing the index over PSSCH slots associated with the PSFCH slot.

12. The one or more processors of any preceding claim, the operations further comprising:
    determining a number of PSFCH resources available for multiplexing HARQ-ACK in the PSFCH transmission based on a resource block index and based on a cyclic shift pair index.

13. The one or more processors of claim 12, the operations further comprising indexing the PSFCH resource blocks first based on an ascending order of a PRB index and second based on an ascending order of the cyclic shift pair index.

14. The one or more processors of claim 12, the operations further comprising indexing the PSFCH resource blocks first based on an ascending order of the cyclic shift pair index and second first based on an ascending order of the resource block index.

15. An apparatus comprising the one or more processors configured for wireless communication of any of claim 1 to claim 14.

FIG. 1

200

Configure a per-resource block (RB) set operation in which the total number of PSFCH PRBs over an RB set in each PSFCH periodicity is $M_{PRB,set}^{PSFCH}$ — 202

$\downarrow$

Configure a total number of PSFCH PRBs for each PSSCH/PSCCH transmission as being $M_{subch,slot,reTx}^{PSFCH}$ which is larger than or equal to $K_3$ — 204

$\downarrow$

Index PSFCH dedicated PRBs over $M_{PRB,set}^{PSFCH}$ PRBs — 206

$\downarrow$

Allocate, by the UE, the set of PSFCH PRBs for the corresponding PSSCH transmission — 208

$\downarrow$

Determine, by the UE, a number of PSFCH resources available for multiplexing HARQ-ACK in a PSFCH transmission — 210

$\downarrow$

Index PSFCH resources — 212

$\downarrow$

Determine, by the UE, the indices of PSFCH resources for a PSFCH transmission with HARQ-ACK information in response to a PSSCH reception — 214

FIG. 2A

220

Configure a per-resource pool operation in which the total number of PSFCH PRBs over an RB set in each PSFCH periodicity is

$$M_{PRB,set}^{PSFCH}$$

222

Configure a total number of PSFCH PRBs for each PSSCH/ PSCCH transmission as being

$$M_{subch,slot,reTx}^{PSFCH}$$

which is larger than or equal to $K_3$

224

Index PSFCH dedicated PRBs over

$$M_{PRB,set}^{PSFCH}$$

PRBs

226

Allocate, by the UE, the set of PSFCH PRBs for the corresponding PSSCH transmission

228

Determine, by the UE, a number of PSFCH resources available for multiplexing HARQ-ACK in a PSFCH transmission

230

Index PSFCH resources

232

Determine, by the UE, the indices of $K_3$ PSFCH resources for a PSFCH transmission with HARQ-ACK information in response to a PSSCH reception

234

FIG. 2B

*300*

PRB

Frequency

Common
Interlace

39                39
                  38
19                37
9                 36

12
2

                  7
                  6
11                5
1                 4

          30      3
                  2
10                1
0                 0

302        304

FIG. 3

FIG. 4

504

502

500

19 15 11 7 3

18 14 10 6 2

17 13 9 5 1

16 12 8 4 0

1 PRB

Slot Slot
PSSCH Resources without PSFCH
Retransmission

Slot Slot
PSSCH Resources with PSFCH
Retransmission

FIG. 5

$N_{CS}^{PSFCH}$ cyclic shift pairs

$M_{subch,slot,reTx}^{PSFCH}$ PRBs

| 3 | 6 | 9 | 12 | 15 | 18 |

| 2 | 5 | 8 | 11 | 14 | 17 |

| 1 | 4 | 7 | 10 | 13 | 16 |

PRB

Cyclic shift pair

FIG. 6

EP 4 507 241 A1

700

Receiving configuration data specifying a mapping for physical sidelink shared channel (PSSCH) or physical sidelink control channel (PSCCH) resource blocks to respective candidate physical sidelink feedback channel (PSFCH) resource blocks $\qquad$ 702

Transmitting the PSSCH or PSCCH transmission $\qquad$ 704

Receiving, based on the mapping, a PSFCH transmission from a user equipment (UE), the PSFCH transmission being transmitted using a PSFCH resource block of the set of candidate PSFCH resource blocks $\qquad$ 706

# FIG. 7

FIG. 8

800

RF INTERFACE CIRCUITRY 804

PROCESSORS Y102

BB 822A

CPU 822B

GPU 822C

USER INTERFACE 808

SENSORS 810

DRIVER CIRCUITRY 812

PMIC 814

BATTERY 818

MEMORY/STORAGE 806

COMMUNICATION PROTOCOL STACK 824

820

816

FIG. 9

Europäisches
Patentamt

European
Patent Office

Office européen
des brevets

# EUROPEAN SEARCH REPORT

**Application Number**

EP 24 19 3674

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SEUNGMIN LEE ET AL: "Discussion on physical channel design framework for sidelink on unlicensed spectrum", 3GPP DRAFT; R1-2302923; TYPE DISCUSSION; NR_SL_ENH2-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Online; 20230417 - 20230426 10 April 2023 (2023-04-10), XP052293498, Retrieved from the Internet: URL:https://www.3gpp.org/ftp/TSG_RAN/WG1_R L1/TSGR1_112b-e/Docs/R1-2302923.zip R1-2302923 Discussion on physical channel design for NR SL transmission on unlicensed band.docx [retrieved on 2023-04-10] * paragraphs [2.1.1], [02.3] * ----- -/-- | 1-15 | INV. H04L5/00 |

**TECHNICAL FIELDS SEARCHED (IPC)**

H04L

The present search report has been drawn up for all claims

| Place of search | Date of completion of the search | Examiner |
|---|---|---|
| The Hague | 2 December 2024 | Sorrentino, Andrea |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

      .................................................................
& : member of the same patent family, corresponding document

EPO FORM 1503 03.82 (P04C01)

**EUROPEAN SEARCH REPORT**

Europäisches
Patentamt
European
Patent Office
Office européen
des brevets

| Application Number |
| --- |
| EP 24 19 3674 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| A | APPLE: "Sidelink Physical Channel Design Framework for Unlicensed Spectrum", 3GPP DRAFT; R1-2305244, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. 3GPP RAN 1, no. Incheon, Korea; 20230522 - 20230526 15 May 2023 (2023-05-15), XP052385645, Retrieved from the Internet: URL:https://ftp.3gpp.org/tsg_ran/WG1_RL1/T SGR1_113/Docs/R1-2305244.zip R1-2305244 Sidelink Physical Channel Design Framework for Unlicensed Spectrum.docx [retrieved on 2023-05-15] * paragraphs [02.3], [02.4] * ----- | 1-15 | |
| A | QUALCOMM INCORPORATED: "Physical Channel Design for Sidelink on Unlicensed Spectrum", 3GPP DRAFT; R1-2207234, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. 20220822 - 20220826 13 August 2022 (2022-08-13), XP052275170, Retrieved from the Internet: URL:https://ftp.3gpp.org/tsg_ran/WG1_RL1/T SGR1_110/Docs/R1-2207234.zip R1-2207234.docx [retrieved on 2022-08-13] * paragraph [2.3.2] * ----- | 1-15 | **TECHNICAL FIELDS SEARCHED (IPC)** |

-/--

The present search report has been drawn up for all claims

| Place of search | Date of completion of the search | Examiner |
| --- | --- | --- |
| The Hague | 2 December 2024 | Sorrentino, Andrea |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

# EUROPEAN SEARCH REPORT

Application Number

EP 24 19 3674

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YAN CHENG ET AL: "Physical channel design for sidelink operation over unlicensed spectrum", 3GPP DRAFT; R1-2302354; TYPE DISCUSSION; NR_SL_ENH2-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Online; 20230417 - 20230426 7 April 2023 (2023-04-07), XP052292933, Retrieved from the Internet: URL:https://www.3gpp.org/ftp/TSG_RAN/WG1_RL1/TSGR1_112b-e/Docs/R1-2302354.zip R1-2302354.docx [retrieved on 2023-04-07] * paragraphs [02.3], [02.4] * | 1-15 | |

TECHNICAL FIELDS
SEARCHED      (IPC)

The present search report has been drawn up for all claims

| Place of search | Date of completion of the search | Examiner |
|---|---|---|
| The Hague | 2 December 2024 | Sorrentino, Andrea |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 

& : member of the same patent family, corresponding
   document

EPO FORM 1503 03.82 (P04C01)

**REFERENCES CITED IN THE DESCRIPTION**

**Patent documents cited in the description**

- US 63531735